# EUROPEAN PATENT APPLICATION

(11) **EP 2 631 972 A1**
(43) Date of publication of application: **28.08.2013**
(21) Application number: 12001543.3
(22) Date of filing: 07.03.2012
(51) Int. Cl.: H01M 4/13, H01M 4/62

(54) **Method for producing composition for forming positive electrode material mixture layer and method for producing lithium ion secondary battery**

(30) Priority: 24.02.2012 JP 2012038241
(71) Applicant: HITACHI, LTD., Tokyo 100-8280 (JP)
(72) Inventor: Mitsuhashi, Hiroyuki, Otokuni-gun Kyoto 618-8525 (JP)
(74) Representative: Diehl & Partner GbR

(57) **Abstract**

A method for producing a composition for forming a positive electrode material mixture layer of the present invention either includes the steps of; (1) mixing a positive electrode active material and phosphoric acid or a phosphate compound to form a mixture; and mixing the mixture and the binder to form a composition, or includes the steps of: (2) forming a mixture containing a positive electrode active material and a binder, and mixing the mixture and phosphoric acid or a phosphate compound to form a composition, wherein the formed composition for forming a positive electrode material mixture layer contains the solvent and has a viscosity adjusted to 15000 mPa·s or less.

## Description

The present invention relates to a production method that can inhibit any excessive increase in viscosity and the gelation of a composition for forming a positive electrode material mixture layer, and a method for producing a lithium ion secondary battery using the composition for forming a positive electrode material mixture layer.

Lithium ion secondary batteries are used as power sources for electronic devices such as a mobile phone and a notebook computer because they have a high voltage and high capacity, and their application has been expanded to electric vehicles and so forth.

A positive electrode used in a lithium ion secondary battery is produced through, for example, the process of adding a solvent to a positive electrode active material and a binder, and also to a conductivity enhancing agent and the like, followed by mixing, to prepare a slurry or paste composition for forming a positive electrode material mixture layer, applying this composition for forming a positive electrode material mixture layer to the surface of a conductive substrate that will serve as a current collector before removing the solvent by drying, and optionally performing a pressing process or the like, to form a positive electrode material mixture layer whose thickness and density have been adjusted.

The above-described composition for forming a positive electrode material mixture layer may undergo a significant viscosity increase or even may turn into a gel after a certain period of storage. A composition for forming a positive electrode material mixture layer whose viscosity has extremely increased or that has turned into a gel and thus has lost its flowability is difficult to apply to a current collector, and therefore such composition cannot be used for the production of a positive electrode. Accordingly, an increase in viscosity or the gelation of the composition for forming a positive electrode material mixture layer leads to a compromise of the productivity of a positive electrode for a lithium ion secondary battery and hence a compromise of the productivity of a lithium ion secondary battery.

LiCoO₂ is widely used as a positive electrode active material for currently available lithium ion secondary batteries. Meanwhile, for example, the use of a lithium-containing composite oxide containing Ni as a positive electrode active material having a capacity larger than LiCoO₂ is becoming increasingly common. However, a composition for forming a positive electrode material mixture layer in which a lithium-containing composite oxide containing Ni is used as a positive electrode active material is more susceptible to the above-described viscosity increase and gelation than a composition for forming a positive electrode material mixture layer that contains LiCoO₂. Accordingly, there is a need for development of means for circumventing these problems and increasing the productivity of positive electrodes for lithium ion secondary batteries (the productivity of lithium ion secondary batteries).

Meanwhile, the techniques for inhibiting the gelation of a composition for forming a positive electrode material mixture layer during its preparation have also been proposed. For example, JP 10-79244A discloses an electrode containing at least an electrode active material and a binder, and additionally contains a neutralized salt of organic acid or a neutralized salt of inorganic acid, and a non-aqueous electrolyte secondary battery using the electrode. JP 10-79244A discloses the addition of an organic acid such as trifluoromethane sulfonic acid or an inorganic acid such as a phosphoric acid to a paste for forming a positive electrode (positive electrode material mixture layer) leads to the formation of neutralized salts of these acids, thereby inhibiting the gelation of the paste.

However, the investigation carried out by the present inventor has proved that the method disclosed in JP 10-79244A may not be able to satisfactorily inhibit an increase in viscosity and the gelation of a composition for forming a positive electrode material mixture layer.

Furthermore, as techniques that are primarily intended to improve the charge/discharge cycle characteristics, rather than to inhibit an increase in viscosity and the gelation of a composition for forming a positive electrode material mixture layer, JP 2002-216768A and JP 2003-45433A propose non-aqueous secondary batteries including an electrode containing an organophosphate or a salt thereof, or a phosphate compound having an aromatic substituent.

The present invention has been achieved in view of the foregoing circumstances, and provides a method for producing a composition for forming a positive electrode material mixture layer that can inhibit an excessive increase in viscosity and the gelation of a composition for forming a positive electrode material mixture layer, and a method for producing a lithium ion secondary battery using the composition for forming a positive electrode material mixture layer.

A method for producing a composition for forming a positive electrode material mixture layer according to the present invention is a method for producing a composition for forming a positive electrode material mixture layer that contains at least a positive electrode active material, a binder, and a solvent, and the method includes the aspect (1) or (2) described below, wherein the formed composition for forming a positive electrode material mixture layer contains the solvent and has a viscosity adjusted to 15000 mPa·s or less.

(1) The method includes the steps of: mixing the positive electrode active material and phosphoric acid or a phosphate compound to form a mixture; and mixing the mixture and the binder to form a composition.
(2) The method includes the steps of: forming a mixture containing the positive electrode active material and the binder; and mixing the mixture and phosphoric acid or a phosphate compound to form a composition.

A method for producing a lithium ion secondary battery according to the present invention is a method for producing a lithium ion secondary battery including a positive electrode, a negative electrode, a separator, and a non-aqueous electrolyte, and the method includes the steps of: applying, to one side or both sides of a current collector, a composition for forming a positive electrode material mixture layer that has been produced by the method for producing a composition for forming a positive electrode material mixture layer according to the present invention, followed by drying, to produce a positive electrode; and assembling the lithium ion secondary battery using the positive electrode produced in said step, the negative electrode, the separator, and the non-aqueous electrolyte.

According to the present invention, it is possible to provide a method for producing a composition for forming a positive electrode material mixture layer that can inhibit an excessive increase in viscosity and the gelation of a composition for forming a positive electrode material mixture layer, and a method for producing a lithium ion secondary battery using the composition for forming a positive electrode material mixture layer. With the use of a composition for forming a positive electrode material mixture layer obtained by the production method of the present invention, it is possible to increase the productivity of positive electrodes for lithium ion secondary batteries and lithium ion secondary batteries.

A composition for forming a positive electrode material mixture layer that is produced by the production method of the present invention is used for forming a positive electrode material mixture layer of a positive electrode of a lithium ion secondary battery, contains at least a positive electrode active material, a binder, and a solvent, and is in the form of a slurry or a paste, for example.

Although composite oxides containing lithium and a transition metal (lithium-containing composite oxides) are commonly used as the positive electrode active material for a composition for forming a positive electrode material mixture layer, these composite oxides contain an alkaline component such as LiOH as an unreacted portion of the raw materials used for their synthesis or a by-product formed during synthesis. This alkaline component acts on the binder (in particular, a fluorocarbon resin such as polyvinylidene fluoride) contained in the composition for forming a positive electrode material mixture layer so as to increase the molecular weight of the binder or to form a cross-linked structure in the binder, thus causing an increase in viscosity or the gelation of the composition for forming a positive electrode material mixture layer.

Meanwhile, as disclosed in JP 10-79244A, specific organic acids, inorganic acids, and the like have the effect of forming a neutralized salt with an alkaline component contained in the positive electrode active material, and thus inhibit the effects of the alkaline component on the binder. However, by simply adding organic acid or inorganic acid during preparation of a composition for forming a positive electrode material mixture layer, it is not possible to sufficiently utilize their effect (the effect of inhibiting the effects on the binder of any alkaline component contained in the positive electrode active material).

As the result of intensive studies, the present inventor has achieved the present invention based on the finding that, if an additive capable of inhibiting the effects of any alkaline component contained in a positive electrode active material is added in a specific step during preparation of a composition for forming a positive electrode material mixture layer, the effect of this additive can be utilized more effectively, which makes it possible to satisfactorily inhibit an increase in viscosity and the gelation of the composition for forming a positive electrode material mixture layer.

The method for producing a composition for forming a positive electrode material mixture layer according to the present invention has the above-described aspect (1) or (2).

The aspect (1) of the production method according to the present invention includes the steps of mixing a positive electrode active material and phosphoric acid or a phosphate compound (hereinafter, may be collectively referred to as "phosphate") to form a mixture; and mixing the mixture and a binder to form a composition.

At the time of preparation of a composition for forming a positive electrode material mixture layer, it is possible to use, for example, a method in which a positive electrode active material and a binder, as well as a conductivity enhancing agent and the like are mixed to form a positive electrode material mixture, to which a solvent is added and mixed, or a method in which a solution in which a binder is dissolved in a solvent is mixed with a mixture that has been formed by mixing a positive electrode active material and a conductivity enhancing agent in advance.

However, in the case where a composition for forming a positive electrode material mixture layer is prepared using a positive electrode active material containing a comparatively large amount of alkaline component, including, for example, a lithium-containing composite oxide containing Ni, upon mixing the positive electrode active material and a binder or a solution containing the binder, the alkaline component contained in the positive electrode active material acts on the binder. Consequently, the composition for forming a positive electrode material mixture layer may undergo a significant viscosity increase or the gelation in the middle of the preparation or during storage after preparation.

Further, the alkaline component contained in the positive electrode active material may be incorporated not only in the surface of the positive electrode active material particles, but also in the inside of the primary particles and inside of the secondary particles formed by aggregation of the primary particles. At the time of preparation of a composition for forming a positive electrode material mixture layer, the positive electrode active material particles sometimes may be actively micronized by, for example, cracking the secondary particles of the positive electrode active material or pulverizing the primary particles of the positive electrode active material for the purpose of adjusting the particle diameter and the specific surface area of the positive electrode active material particles. In that case, there is the possibility that the alkaline component is exposed on a newly generated surface formed by cracks of the primary particles or the secondary particles of the positive electrode active material, which acts on the binder. As a result, the composition for forming a positive electrode material mixture layer may undergo a significant viscosity increase or the gelation in the middle of the preparation or during storage after the preparation.

Therefore, with the aspect (1) of the production method according to the present invention, the step of mixing a positive electrode active material and a phosphate to form a mixture, and the step of mixing the mixture with a binder to form a composition are provided. The phosphate added to the positive electrode active material has the function for inhibiting the effects of any alkaline component contained in the positive electrode active material on the binder. Thus, for example, in the case of using, for preparation of a composition for forming a positive electrode material mixture layer, a positive electrode active material in which a newly generated surface has been formed due to the use of a positive electrode active material containing a particularly large amount of an alkaline component or the active micronization of the primary particles or the secondary particles of the positive electrode active material, a molecular weight increase of the binder and the formation of a cross-linked structure in the binder can be inhibited by treating, with the phosphate, the active sites caused by the alkaline component contained in the positive electrode active material in a stage before the positive electrode active material comes into contact with the binder even if the positive electrode active material comes into contact with the binder thereafter.

Therefore, according to the aspect (1) of the production method of the present invention, even in the case of using a positive electrode active material containing a large amount of an alkaline component or a positive electrode active material in which the number of the active sites caused by the alkaline component has been increased by a cracking process or the like, an excessive increase in viscosity and the gelation of a composition for forming a positive electrode material mixture layer in the middle of the production or after storage can be inhibited, and the viscosity of the composition for forming a positive electrode material mixture layer can be adjusted to a viscosity that allows the application to a current collector, namely, a viscosity of 15000 mPa·s or less. Accordingly, it is possible to inhibit the generation of a composition for forming a positive electrode material mixture layer that cannot be used for the production of positive electrodes of lithium ion secondary batteries, thereby increasing the productivity of positive electrodes of lithium ion secondary batteries.

In the aspect (1) of the production method of the present invention, it is preferable, at the time of adding a phosphate, that the phosphate is dissolved or dispersed in a solvent (solvent of a composition for forming a positive electrode material mixture layer) before use.

In this case, it is preferable to prepare in advance a solution in which the phosphate is dissolved in the solvent and then add this solution, but it is also possible to allow the phosphate to be gradually dissolved in the solvent when the positive electrode active material is dispersed in the solvent. Alternatively, it is also possible to directly mix the positive electrode active material and the phosphate by a dry method to cause the phosphate to adhere to the surface of the positive electrode active material, and disperse them in the solvent.

In the aspect (1) of the production method of the present invention, the step of adding a binder may be performed after the step of mixing a positive electrode active material and a phosphate. It is also possible to add a phosphate at the time of adding a binder, and mixing the binder with, for example, a mixture obtained by mixing the positive electrode active material and the phosphate. The number of times of addition of the phosphate in this case may be once, or twice or more. In this case, the addition of the phosphate may carried out followed by the step of adding the binder, but it is also possible to add the binder and the phosphate concurrently. For example, it is also possible to dissolve or disperse the phosphate in a solution in which the binder is dissolved or dispersed, followed by the addition of this solution.

The solvent is used in order to enable the composition for forming a positive electrode material mixture layer to be applied to the current collector. In the aspect (1) of the production method of the present invention, the step of adding the solvent may be performed, for example, after forming a mixture (positive electrode material mixture) containing the positive electrode active material, the phosphate, the binder, and also a conductivity enhancing agent, which will be described later. Alternatively, the step of adding the solvent may be provided as a step in which the binder is dissolved or dispersed in the solvent in advance, and this solution or dispersion is added to a mixture containing the positive electrode active material, the phosphoric acid, and also a conductivity enhancing agent. After this step, the step of further adding a solvent containing no binder may be performed.

Usually, a positive electrode material mixture layer contains a conductivity enhancing agent so that its conductivity is ensured. Accordingly, it is preferable that a composition for forming a positive electrode material mixture layer that is produced by the production method of the present invention also contains a conductivity enhancing agent.

In the aspect (1) of the production method of the present invention, there is no particular limitation with respect to the order of the step of adding a conductivity enhancing agent being performed. Specifically, the step of adding a conductivity enhancing agent may be performed, for example, before the step of mixing the positive electrode active material and the phosphate (in this case the phosphate is added to a mixture of the positive electrode active material and the conductivity enhancing agent), or immediately after the step of mixing the positive electrode active material and the phosphate. Alternatively, the binder may be further added to a mixture formed by mixing the positive electrode active material and the phosphate, and the step of adding the conductivity enhancing agent may be performed thereafter.

However, if too much stress (for example, shearing stress) is applied to a conductivity enhancing agent, the conductivity enhancing agent is micronized, which may reduce the effect of increasing the conductivity of the positive electrode material mixture layer. Therefore, for example, in the case of actively micronizing the primary particles or secondary particles of the positive electrode active material, it is preferable that a conductivity enhancing agent is not added during or in a stage before the micronization step.

The aspect (2) of the production method of the present invention includes the step of forming a mixture containing the positive electrode active material and the binder, and the step of mixing the mixture and a phosphate to form a composition.

Not only in the case of actively micronizing the primary particles or secondary particles of the positive electrode active material, but also in the case of mixing the positive electrode active material and another component, the primary particles or secondary particles of the positive electrode active material may inevitably crack so that a newly generated surface is formed, and an alkaline component is exposed on the newly generated surface, resulting in an increase in molecular weight of the binder or the formation of a cross-linked structure in the binder.

Therefore, with the aspect (2) of the production method of the present invention, the step of forming a mixture containing a positive electrode active material and a binder, and the step of mixing the mixture and a phosphate to form a composition are provided. Thereby, even if a newly generated surface has been formed due to cracks of the primary particles or secondary particles of the positive electrode active material at the time of forming a mixture containing a positive electrode active material and a binder, the active sites caused by an alkaline component exposed on the newly generated surface can be treated with a phosphate. Therefore, an increase in molecular weight of the binder and the formation of a cross-linked structure in the binder can be inhibited in the step after the step of forming a mixture containing a positive electrode active material and a binder.

Thus, according to the aspect (2) of the production method of the present invention, even if the primary particles or secondary particles of the positive electrode active material have cracked during the production of a composition for forming a positive electrode material mixture layer, an excessive increase in viscosity or the gelation of the composition for forming a positive electrode material mixture layer in the middle of the production or after storage can be inhibited, and the viscosity of the composition for forming a positive electrode material mixture layer can be adjusted to 15000 mPa·s or less, which allows the application of the composition to the current collector. Accordingly, it is possible to reduce the ratio of compositions for forming a positive electrode material mixture layer that cannot be used for the production of positive electrodes of lithium ion secondary batteries, thereby increasing the productivity of positive electrodes of lithium ion secondary batteries.

In the aspect (2) of the production method of the present invention, the step of forming a mixture containing a positive electrode active material and a binder, and the step of mixing the mixture with a phosphate, may be performed intermittently, or may be performed continuously.

In the case where the step of forming a mixture containing a positive electrode active material and a binder and the step of mixing the mixture and a phosphate are performed intermittently, the step of mixing the mixture and a phosphate may be performed after the step of forming a mixture containing a positive electrode active material and a binder.

On the other hand, in the case where the step of forming a mixture containing a positive electrode active material and a binder and the step of mixing the mixture and a phosphate are performed continuously, a composition that contains a positive electrode active material and a binder and to which a phosphate has been added can be obtained by charging a phosphate in a mixer in which a mixture containing a positive electrode active material and a binder is formed in a stage in which the mixture has been formed, and further performing mixing. Thus, the step of forming a mixture containing a positive electrode active material and a binder and the step of mixing the mixture and a phosphate to form a composition according to the aspect (2) of the production method of the present invention include a case where a phosphate is added in the middle of the step of forming a mixture containing a positive electrode active material and a binder (in the middle of mixing of a positive electrode active material and a binder).

At the time of adding a phosphate in the aspect (2) of the production method of the present invention, as in the case of the aspect (1), it is preferable that the phosphate is dissolved or dispersed in a solvent (solvent of a composition for forming a positive electrode material mixture layer) before use.

In this case, as in the case of the aspect (1), it is also preferable that a solution in which the phosphate is dissolved in a solvent is prepared in advance and this solution is then added. However, the phosphate may be gradually dissolved in the solvent when the phosphate is dispersed in the mixture containing a positive electrode active material and a binder. Furthermore, a mixture containing a positive electrode active material and a binder may be directly mixed with the phosphate by a dry method to cause the phosphate to adhere to the surface of the positive electrode active material, which may be dispersed in a solvent.

Note that, as in the case of the aspect (1), the step of adding a solvent may be performed, for example, after the formation of a mixture (positive electrode material mixture) containing a positive electrode active material, a phosphate, a binder, and also a conductivity enhancing agent, which will be described later, and the like. After this step, the step of further adding a solvent containing no binder may be performed.

Additionally, in the case of using a positive electrode active material containing a large amount of an alkaline component, such as a lithium-containing composite oxide containing Ni, or providing the step of micronizing the positive electrode active material in advance, the alkaline component adhering to the positive electrode active material and the alkaline component exposed on a newly generated surface of the positive electrode active material particles cause an increase in molecular weight of the binder and the formation of a cross-linked structure in the binder in the step of forming a mixture containing a positive electrode active material and a binder, which may result in an excessive increase in viscosity or the gelation of the composition for forming a positive electrode material mixture layer in the early stage of the above-described steps. Therefore, in such case, it is preferable that the step of mixing a positive electrode active material and a phosphate is performed before the step of forming a mixture containing a positive electrode active material and a binder as in the case of the aspect (1) of the production method of the present invention.

In the case where the positive electrode active material is further micronized at the time of mixing a mixture formed by mixing a positive electrode active material and a phosphate with a binder, or where the micronization of the positive electrode active material is inevitable for the step, it is preferable to provide the step of further adding a phosphate. In the case where the step of forming a mixture containing a positive electrode active material and a binder and the step of mixing the mixture and a phosphate are performed continuously or where a phosphate is added in another step, the number of times that the phosphate is added may be once, or twice or more.

In the case where an excessive increase in viscosity or the gelation of the composition does not proceed too much in the early stage of the step of forming a mixture containing a positive electrode active material, a binder, and a solvent, including, for example, a case where a positive electrode active material containing a small amount of alkaline components is used, the step of adding a phosphate to a mixture containing a positive electrode active material, a binder, and a solvent may be performed in the middle or after the formation of the mixture, as in the case of the aspect (2) of the production method of the present invention.

Note that, at the time of adding a phosphate to a mixture containing a positive electrode active material and a binder and in the case where the mixture has the same constitution with the desired composition by adding a solvent to the mixture in advance, it is desirable that a phosphate is added before an increase in viscosity of the mixture proceeding, or in other words, in a state in which the viscosity is in the range of 10000 mPa·s or less. Thereby, the viscosity of the produced composition for forming a positive electrode material mixture layer can be adjusted in the range of 15000 mPa·s or less at which the composition has a good applicability to a current collector while the composition containing a predetermined amount of the solvent.

Accordingly, in the case where the step of forming a mixture containing a positive electrode active material, a binder, and a solvent and the step of adding a phosphate to the mixture are performed intermittently, it is preferable that the mixture formation step ends in a stage in which the viscosity of the mixture is 10000 mPa·s or less. In the case where the step of forming a mixture containing a positive electrode active material, a binder, and a solvent and the step of adding a phosphate to the mixture are performed continuously, in order for a phosphate to be added in a stage in which the viscosity of the mixture is 10000 mPa·s or less, it is preferable to examine, in advance, conditions under which the viscosity of the mixture falls within the above-described range (for example, the time elapsed from the start of the mixing).

In the case where a conductivity enhancing agent is used in the aspect (2) of the production method of the present invention, there is no particular limitation with respect to the order of the step of adding the conductivity enhancing agent. Specifically for example, the step of mixing a positive electrode active material and the conductivity enhancing agent to form a mixture containing these may be performed before the step of forming a mixture containing a positive electrode active material and a binder. Alternatively, the step of adding the conductivity enhancing agent may be performed after the step of mixing a mixture containing a positive electrode active material and a binder, and a phosphate.

However, it is preferable that too much stress is not applied to the conductivity enhancing agent as described above. Therefore, in the aspect (2) of the production method of the present invention as well, in the case of, for example, actively micronizing the positive electrode active material particles, it is preferable that the conductivity enhancing agent is not added in the middle of or in a stage before the micronization step.

Note that phosphates are highly adsorptive to the surface of the positive electrode active material, and a phosphate that has once been adsorbed on the surface of the positive electrode active material is difficult to dissolve in a solvent of a composition for forming a positive electrode material mixture layer even if the solvent comes into contact with the phosphate after the adsorption. Therefore, it seems that, for example, a part of the phosphate added can treat the active sites caused by the alkaline component on the surface of the positive electrode active material, and that the rest of the phosphate is adsorbed by the surface of the positive electrode active material, and thus, even if the primary particles or secondary particles of the positive electrode active material are micronized to form a newly generated surface in the subsequent steps, the phosphate cannot sufficiently contribute to the treatment of the active sites caused by the alkaline component exposed on the newly generated surface. In such case, it is preferable to add a portion of the phosphate multiple times, rather than adding the whole amount at once.

There is no particular limitation with respect to the positive electrode active material used for the production method of the present invention, and those used as positive electrode active materials for conventionally known lithium ion secondary batteries, or in other words, positive electrode active materials capable of absorbing and desorbing Li ion can be used. Specific examples thereof include lithium-containing transition metal oxides having a layered structure represented by Li₁₊ₓM¹O₂ (-0.1 < x < 0.1, M¹: Co, Ni, Mn, Al, Mg, etc.); lithium manganese oxides having a spinel structure such as LiMn₂O₄ and substituted LiMn₂O₄ in which a part of the elements is substituted by another element; and lithium-containing composite oxides such as olivine-type compounds represented by LiM²PO₄ (M²: Co, Ni, Mn, Fe, etc.). Specific examples of the lithium-containing transition metal oxides having a layered structure include, in addition to LiCoO₂ and LiNi₁₋ₐ,Co_{a-b}Al_{b}O₂ (0.1≤ a≤ 0.3, 0.01 ≤b≤0.2), oxides containing at least Co, Ni and Mn (LiMnv_{1/3}Ni_{1/3}Co_{1/3}O₂, LiMn_{5/12}Ni_{5/12}Co_{1/6}O₂, LiMn_{3/5}Ni_{1/5}Co_{1/5}O₂, etc.).

The positive electrode active materials listed above may be used alone or in combination of two or more for the production method of the present invention. As described above, among the positive electrode active materials listed above, those containing Ni usually contain a larger amount of an alkaline component than the other positive electrode active materials. Therefore, in the production method of the present invention (in particular, the aspect (1) described above), the effects can be achieved particularly prominently in the case of using a positive electrode active material (lithium-containing composite oxide) containing Ni.

Examples of the binder used for the production method of the present invention include fluorocarbon resins, including, for example, polyvinylidene fluoride (PVDF), copolymers of vinylidene fluoride and another monomer such as vinylidene fluoride-chlorotrifluoroethylene copolymer (VDF-CTFE), vinylidene fluoride-tetrafluoroethylene copolymer (VDF-TFE), and vinylidene fluoride-hexafluoropropylene-tetrafluoroethylene copolymer (VDF-HFP-TFE), and polytetrafluoroethylene (PTFE). These may be used alone or in combination of two or more. Among these binders, it is preferable to use at least polyvinylidene fluoride (PVDF). The reason for this is that, in the case where a composition for forming a positive electrode material mixture layer obtained by the production method of the present invention contains PVDF as the binder, the positive electrode material mixture layer formed by the composition has favorable properties because PVDF has high binding strength.

At the same time, a PVDF-containing composition for forming a positive electrode material mixture layer is particularly prone to cause an excessive increase in viscosity and the gelation. PVDF tends to undergo dehydrofluorination caused by an alkaline component (especially, LiOH) serving as the positive electrode active material. It seems that this promotes an increase in molecular weight of PVDF and the formation of a cross-linked structure in PVDF, which leads to an increase in viscosity or the gelation of the composition for forming a positive electrode material mixture layer. However, according to the production method of the present invention, an excessive increase in viscosity and the gelation of the composition for forming a positive electrode material mixture layer can be satisfactorily inhibited even in the case of using PVDF as the binder.

Examples of the solvent used for the production method of the present invention include organic solvents such as N-methyl-2-pyrrolidone (NMP), acetone, and N,N-dimethylethyleneurea; and water. Among these, NMP is particularly preferable.

Examples of the phosphoric acid or the phosphate compound for the production method of the present invention include phosphoric acids (inorganic phosphates) or salts thereof, and organophosphates or salts thereof. These may be used alone or in combination of two or more.

Examples of organophosphates include phosphoric acid including an aromatic ring such as phenylphosphonic acid and diphenylphosphinic acid; and alkylphosphoric acids such as methylphosphonic acid and dimethylphosphonic acid. Examples of salts of phosphoric acid or organophosphate include alkali metal salts (lithium salt, sodium salt, potassium salt, etc.) and ammonium salts of phosphoric acid or the organophosphates listed above.

The amount of the phosphate used for the production method of the present invention (in the case of using a plurality of phosphates in combination, the total amount thereof; the same applies to the amount of the phosphoric acid used for the production method of the present invention hereinafter) is preferably 0.01 parts by mass or more, more preferably 0.05 parts by mass or more, with respect to 100 parts by mass of the positive electrode active material, from the viewpoint of satisfactorily ensuring the effects provided by the use thereof. However, if the amount of the phosphate used for preparation of the composition for forming a positive electrode material mixture layer is too large, the battery storability will deteriorate, and the battery capacity tends to decrease after a long period of storage. Therefore, the amount of the phosphate used for the production method of the present invention is preferably 1 part by mass or less, more preferably 0.5 parts by mass or less, with respect to 100 parts by mass of the positive electrode active material.

In the case of using a conductivity enhancing agent in the production method of the present invention, for example, it is preferable to use, as the conductivity enhancing agents, carbon materials, including, for example, graphites such as natural graphite (flake graphite, etc.) and artificial graphite; carbon blacks such as acetylene black, ketjen black, channel black, furnace black, lamp black, and thermal black; and carbon fiber. It is also possible to use conductive fibers such as metal fiber; carbon fluoride; metal powders such as aluminum powder; zinc oxide; conductive whiskers such as potassium titanate; conductive metal oxides such as titanium oxide; and organic conductive materials such as polyphenylene derivatives.

In a composition for forming a positive electrode material mixture layer obtained by the production method of the present invention, the content of solids including the positive electrode active material, the binder, and the conductivity enhancing agent (the components other than the solvent; hereinafter the same) is preferably 72 to 86 mass%, for example. In the total amount of solids of the composition for forming a positive electrode material mixture layer, that of the positive electrode active material is preferably 96 to 98 mass%, that of the binder is preferably 1.0 to 1.5 mass%, and the amount of the conductivity enhancing agent is preferably 0.9 to 2.0 mass%.

In the production method of the present invention, the mixing of the various components may be performed using, for example, a conventionally known batch-type mixer (a kneader, a planetary mixer, etc.), or may be continuously performed using a biaxial kneader/extruder (a continuous biaxial kneader/extruder).

The viscosity of a composition for forming a positive electrode material mixture layer obtained by the production method of the present invention is preferably 1000 mPa·s or more and 15000 mPa·s or less. A composition for forming a positive electrode material mixture layer having a viscosity approximately in the above-described range can be favorably applied to a current collector.

As used herein, the viscosity of a composition for forming a positive electrode material mixture layer is a value measured using an E-type viscometer (VIS CONIC ED-type) manufactured by Tokyo Keiki Inc. with a 1°34' cone at a number of revolutions of 1 R.P.M. (shear rate: 3.83 s-1).

The feature of the method for producing a lithium ion secondary battery according to the present invention lies in that it includes the steps of: applying, to one side or both sides of a current collector, a composition for forming a positive electrode material mixture layer produced by the method for producing a composition for forming a positive electrode material mixture layer of the present invention, followed by drying, to produce a positive electrode; assembling a lithium ion secondary battery using the positive electrode produced in the above-described step, a negative electrode, a separator, and a non-aqueous electrolyte. As for the other steps (the step of producing the negative electrode, the step of disposing the separator between the positive electrode and the negative electrode to produce an electrode assembly, the step of assembling the battery, etc.), the same steps as those used for the production of conventionally known lithium ion secondary batteries may be used.

That is, with the method for producing a lithium ion secondary battery according to the present invention, lithium ion secondary batteries with stable quality can be produced with good productivity due to the use of a composition for forming a positive electrode material mixture layer for which an excessive increase in viscosity or the gelation has been inhibited, produced by the production method of the present invention.

There is no particular limitation with respect to a positive electrode current collector as long as it is an electronic conductor that is chemically stable in the battery formed therewith. Examples of materials that can be used as the material constituting the current collector include aluminum and alloys thereof, stainless steel, nickel and alloys thereof, titanium and alloys thereof, carbon, and conductive resins. Other examples include materials obtained by treating the surface of aluminum or stainless steel with carbon or titanium. Among these, aluminum and aluminum alloys are particularly preferable. The surface of these materials may be oxidized before use. Further, it is preferable to form irregularities on the surface of the current collector by surface treatment. The current collector may be in the form of, for example, a foil, a film, a sheet, a net, a punched structure, a lath, a porous structure, a foam, and a molded article of fiber bundle. The thickness of the positive electrode current collector is preferably, but not limited to, 5 to 50 µm, for example.

In the process of producing a positive electrode, a composition for forming a positive electrode material mixture layer produced by the production method of the present invention is applied to one side or both sides of the above-described positive electrode current collector, followed by drying to remove the solvent contained in the composition, and a pressing process such as calendering is further performed as needed to form a positive electrode material mixture layer, and thereby a positive electrode is obtained.

There is no particular limitation with respect to the method for applying the composition for forming a positive electrode material mixture layer to the surface of the positive electrode current collector, and any of various known application methods may be used. Further, for example, the condition for the pressing process is preferably set such that the line pressure is 700 to 2000 kgf/cm.

The thickness of the positive electrode material mixture layer (in the case where the positive electrode material mixture layer is formed on both sides of the current collector, the thickness per one side) is preferably 30 to 80 µm.

As the negative electrode production step, it is possible to use, for example, the step of sufficiently kneading a mixture (negative electrode material mixture) containing a negative electrode active material, a binder, and also a conductivity enhancing agent and the like as needed, with a suitable solvent added thereto, to prepare a composition for forming a negative electrode material mixture layer (slurry, paste, etc.), applying the composition to one side or both sides of a current collector, followed by drying to remove the solvent contained in the composition, and further performing, as needed, a pressing process such as calendering to form a negative electrode material mixture layer, thus obtaining a negative electrode.

Examples of negative electrode active materials include carbon materials, including, for example, graphite materials such as natural graphite (flake graphite), artificial graphite, and expanded graphite; easily graphitizable carbonaceous materials such as cokes obtained by heating pitch; and hardly graphitizable carbonaceous materials such as furfuryl alcohol resin (FFA), polyparaphenylene (PPP), and amorphous carbon obtained by baking phenol resin at a low temperature. In addition to carbon materials, lithium and lithium-containing compounds can also be used as the negative electrode active material. Examples of lithium-containing compounds include lithium alloys such as Li-Al, and alloys containing an element such as Si and Sn, which can be alloyed with lithium. Further, oxide-based materials such as SN oxides and Si oxides can also be used. The amount of the negative electrode active material in the total amount of the negative electrode material mixture is preferably 97 to 99 mass%, for example.

There is no particular limitation with respect to the conductivity enhancing agent as long as it is an electron conductive material, and the conductivity enhancing agent does not need to be used. Specific examples of the conductivity enhancing agent include carbon materials, including, for example, carbon blacks such as acetylene black, ketjen black, channel black, furnace black, lamp black, and thermal black; and carbon fiber. Other examples include conductive fibers such as metal fiber; carbon fluoride; metal powders such as copper powder and nickel powder; and organic conductive materials such as polyphenylene derivatives. These may be used alone or in combination of two or more. Among these, acetylene black, ketjen black and carbon fiber are particularly preferable. However, in the case of using a conductivity enhancing agent for the negative electrode, the amount of the conductivity enhancing agent in the total amount of the negative electrode material mixture is preferably 10 mass% or less, in order to achieve a high capacity.

The binder for the negative electrode material mixture layer may be either thermoplastic resin or thermosetting resin. Specific examples of usable binders include the various binders listed above as the examples of the binder that can be used for a composition for forming a positive electrode material mixture layer of the present invention, styrene butadiene rubber (SBR), carboxymethyl cellulose (CMC), ethylene-acrylic acid copolymers and Na⁺ ion crosslinked structures of these copolymers, ethylene-methacrylic acid copolymers and Na⁺ ion crosslinked structures of these copolymers, ethylene-methyl acrylate copolymers and Na⁺ ion crosslinked structures of these copolymers, and ethylene-methyl methacrylate copolymers and Na⁺ ion crosslinked structures of these copolymers. These materials may be used alone or in combination of two or more.

Among the binders listed above, particularly preferable are PVDF, SBR, ethylene-acrylic acid copolymers and Na⁺ ion crosslinked structures of these copolymers, ethylene-methacrylic acid copolymers and Na⁺ ion crosslinked structures of these copolymers, ethylene-methyl acrylate copolymers and Na⁺ ion crosslinked structures of these copolymers, and ethylene-methyl methacrylate copolymers and Na⁺ ion crosslinked structures of these copolymers. The amount of the binder in the total amount of the negative electrode material mixture is preferably 1 to 5 mass%, for example.

The thickness of the negative electrode material mixture layer (in the case where the negative electrode material mixture layer is formed on both sides of the current collector, the thickness per one side) is preferably, 30 to 80 µm.

There is no particular limitation with respect to the current collector used for the negative electrode as long as it is an electronic conductor that is chemically stable in a lithium ion secondary battery. Examples of materials constituting this current collector include stainless steel, nickel and alloys thereof, copper and alloys thereof, titanium and alloys thereof, carbon, and conductive resins. Other examples include materials obtained by treating the surface of copper or stainless steel with carbon or titanium. Among these, copper and copper alloys are particularly preferable. The surface of these materials may be oxidized before use. Further, it is preferable to form irregularities on the surface of the current collector by surface treatment. The current collector may be in the form of, for example, a foil, a film, a sheet, a net, a punched structure, a lath, a porous structure, a foam, and a molded article formed of fiber bundle. The thickness of the current collector is preferably, but not limited to, 5 to 50 µm, for example.

In the process of producing an electrode assembly, for example, a positive electrode obtained by a composition for forming a positive electrode material mixture layer produced by the production method of the present invention and the above-described negative electrode are placed on one another, with a separator disposed therebetween, to form a laminated electrode assembly. Alternatively, the laminated electrode assembly is further wound in a spiral fashion, and as needed, shaped to have a flat cross section, to form a wound electrode assembly.

For example, an insulating microporous thin film having a high ion permeability and a predetermined mechanical strength can be used as the separator. Further, it is preferable to use a separator having the function for closing its pores at a temperature greater than or equal to a certain temperature (for example, 100 to 140°C) due to the melting of its constituents, thus increasing the resistance (that is, a separator having a shut-down function). Specific examples of such a separator include a sheet (porous sheet), a non-woven fabric or woven fabric formed of a material such as a polyolefin-based polymer, including, for example, polyethylene (PE) and polypropylene (PP), which are resistant to an organic solvent and hydrophobic, or glass fiber; and a porous structure obtained by fixing fine particles of any of the polyolefin-based polymers listed above with an adhesive. Preferably, the pore diameter of the separator is such that the active materials of the positive and negative electrodes that have been deintercalated from the positive and negative electrodes, the conductivity enhancing agents, the binders, and the like will not pass through. For example, the pore diameter is preferably 0.01 to 1 µm. In general, the thickness of the separator is 8 to 30 µm, but it is preferably 10 to 20 µm according to the present invention. The porosity of the separator can be determined according to the constituents and the thickness of the separator. In general, the porosity is 30 to 80%.

In the battery assembly step, for example, the above-described electrode assembly is housed in an outer case, into which a non-aqueous electrolyte is then injected, and the outer case is thereafter sealed to give a lithium ion secondary battery. As the outer case, it is possible to use, for example, a cylindrical (e.g., rectangular cylindrical or circular cylindrical) outer case can made of steel or aluminum (aluminum alloy) and a laminate outer case made of a laminate film having a metal vapor-deposited thereon.

As the non-aqueous electrolyte, it is possible to use, for example, a solution prepared by dissolving a lithium salt in any of the non-aqueous solvents listed below.

Examples of usable solvents include aprotic organic solvents such as ethylene carbonate (EC), propylene carbonate (PC), butylene carbonate (BC), dimethyl carbonate (DMC), diethyl carbonate (DEC), methyl ethyl carbonate (MEC), y-butyrolactone (y-BL), 1,2-dimethoxyethane (DME), tetrahydrofuran (THF), 2-methyltetrahydrofuran, dimethylsulfoxide (DMSO), 1,3-dioxolane, formamide, dimethylformamide (DMF), dioxolane, acetonitrile, nitromethane, methyl formate, methyl acetate, phosphate triester, trimethoxymethane, dioxolane derivatives, sulfolane, 3-methyl-2-oxazolidinone, propylene carbonate derivatives, tetrahydrofuran derivatives, diethyl ether, and 1,3-propanesultone. These may be used alone or as a solvent mixture of two or more thereof.

Examples of the lithium salt for the non-aqueous electrolyte include at least one of lithium salts selected from LiClO₄, LiPF₆, LiBF₄, LiAsF₆, LiSbF₆, LiCF₃SO₃, LiCF₃CO₂, Li₂C₂F₄ (SO₃)₂, LiN (CF₃SO₂)₂, LiC (CF₃SO₂)₃, LiCₙF₂ₙ₊₁SO₃ (2≤ n≤ 7), and LiN (RfOSO₂)₂ (where Rf represents a fluoroalkyl group). The concentration of these lithium salts in the non-aqueous electrolyte is preferably 0.6 to 1.8 mol/L, more preferably 0.9 to 1.6 mol/L.

Further, an electrolyte that has been formed into a gel (gel electrolyte) by adding a publicly known gelling agent such as a polymer to any of the above-described non-aqueous electrolytes can also be used for the production method of the present invention.

The electrical connection between the terminals of the outer case and the electrodes of the electrode assembly, and the sealing of the outer case may be performed according to conventional methods.

A lithium ion secondary battery produced according to the present invention can be used for the same applications as those of conventionally known lithium ion secondary batteries.

Hereinafter, the present invention will be described in detail by way of examples. It should be noted, however, that the examples given below are not intended to limit the present invention.

### Example 1

While 130 parts by mass of LiNiO₂ serving as a positive electrode active material and 2 parts by mass of acetylene black serving as a conductivity enhancing agent were mixed with a mixer, a solution in which 0.13 part by mass of phenylphosphonic acid was dissolved in 1.3 parts by mass of NMP was added dropwise to the mixture. Subsequently, an NMP solution containing PVDF serving as a binder (with a PVDF concentration of 8 mass%) was added in an amount to give 3 parts by mass of PVDF, followed by mixing to prepare a paste for forming a positive electrode material mixture layer.

### Example 2

A paste for forming a positive electrode material mixture layer was prepared in the same manner as in Example 1 except that an ammonium salt of phenylphosphonic acid was used in place of phenylphosphonic acid.

### Comparative Example 1

A paste for forming a positive electrode material mixture layer was prepared in the same manner as in Example 1 except that an NMP solvent containing no phosphate was used in place of the NMP solution containing phenylphosphonic acid.

The viscosities of the pastes for forming a positive electrode material mixture layer of Examples 1 and 2 and Comparative Example 1 immediately after preparation and after 24 hours from preparation were measured by the above-described method. The results are shown in Table 1.

**[Table 1]**

| | Viscosity of paste containing positive electrode material mixture (mPa·s) | |
|---|---|---|
| | Immediately after preparation | After 24 hours from preparation |
| Example 1 | 3000 | 3100 |
| Example 2 | 3100 | 3500 |
| Com. Ex. 1 | 3800 | Immeasurable due to viscosity increase |

As shown in Table 1, for the compositions for forming a positive electrode material mixture layer of Examples 1 and 2, which were prepared by the method in which a phosphate was added with a proper timing, the viscosities immediately after preparation were maintained at a level suitable for the application of the compositions to the current collector. Moreover, no significant increase in viscosity is observed even after the passage of 24 hours. The positive electrode active material used for the compositions for forming a positive electrode material mixture layer of Examples 1 and 2 was LiNiO₂, which contained a comparatively large amount of alkaline component. It can be said that, even in the case of using such a positive electrode active material, these compositions for forming a positive electrode material mixture layer were able to satisfactorily inhibit the change in viscosity over time, and can contribute to stable production of positive electrodes of lithium ion secondary batteries.

In contrast, for the composition for forming a positive electrode material mixture layer of Comparative Example 1, which was prepared without addition of a phosphate, the viscosity immediately after preparation was higher than the viscosities of the compositions of Examples 1 and 2. Moreover, the viscosity was immeasurable after the passage of 24 hours, and the viscosity increased to a level that made it difficult to apply the composition to the current collector difficult.

### Example 3

120 parts by mass of LiNi₀.₅Co₀.₂Mn₀.₃O₂ serving as a positive electrode active material, 1 part by mass of PVDF serving as a binder, and 41 parts by mass of NMP were mixed to give a slurry. This slurry was placed in a closed container made of polyethylene, together with zirconia beads having a diameter of 3 mm, and subjected to a cracking process in a paint shaker for one hour. Subsequently, a solution in which 0.12 part by mass of phenylphosphonic acid was dissolved in 1.2 parts by mass of NMP was added into this closed container, the treatment using the paint shaker was further performed for one hour, and then the zirconia beads were removed from the slurry in the closed container using a sieve to give a cracked slurry.

Further, 3.6 parts by mass of acetylene black serving as a conductivity enhancing agent, 6.2 parts by mass of PVDF serving as a binder, and 19.2 parts by mass of NMP were mixed with a mixer to prepare a conductivity enhancing agent paste. Then, the above-described cracked slurry and the conductivity enhancing agent paste were mixed to give a paste for forming a positive electrode material mixture layer.

### Example 4

A paste for forming a positive electrode material mixture layer was prepared in the same manner as in Example 3 except that the amount of phenylphosphonic acid added with respect to 100 parts by mass of the positive electrode active material was changed to 0.01 part by mass.

### Comparative Example 2

An attempt was made to prepare a slurry for forming a positive electrode material mixture layer in the same manner as in Example 3 except that the addition of the NMP solution containing phenylphosphonic acid was performed concurrently with the addition of the binder, and that the mixing of the positive electrode active material, the binder and phosphonic acid was performed in a single step. However, the viscosity of the cracked slurry became extremely high, and therefore it was difficult to uniformly mix the slurry and the conductivity enhancing agent paste.

### Comparative Example 3

A paste for forming a positive electrode material mixture layer was prepared by performing a cracking process with the paint shaker for two hours, adding an NMP solution containing phenylphosphonic acid to the slurry whose viscosity exceeded 10000 mPa·s, followed by further mixing. However, the viscosity of the cracked slurry became extremely high, and therefore it was difficult to uniformly mix the slurry and the conductivity enhancing agent paste.

The viscosities of the pastes for forming a positive electrode material mixture layer of Examples 3 and 4 and Comparative Examples 2 and 3 immediately after preparation and after 24 hours from preparation were measured by the above-described method. Further, for these examples, the viscosities of the cracked slurries, which were formed in the middle of the preparation of the pastes for forming a positive electrode material mixture layer, were measured by the same method as that used for the pastes for forming a positive electrode material mixture layer. The results are shown in Table 2. Note that, for the pastes for forming a positive electrode material mixture layer of Comparative Examples 2 and 3, uniform mixing was difficult to perform in the final step as described above, and therefore the viscosity measurement was not carried out.

**[Table 2]**

| | Viscosity of cracked slurry (mPa·s) | Viscosity of paste containing positive electrode material mixture (mPa·s) | |
|---|---|---|---|
| | | Immediately after preparation | After 24 hours from preparation |
| Example 3 | 800 | 4000 | 4000 |
| Example 4 | 820 | 4500 | 5000 |
| Com. Ex. 2 | Immeasurable due to viscosity increase (> 15000) | - | - |
| Com. Ex. 3 | Immeasurable due to viscosity increase (> 15000) | - | - |

As shown in Table 2, for the compositions for forming a positive electrode material mixture layer of Examples 3 and 4, which were prepared by the method in which a phosphate was added with a proper timing, the viscosities immediately after preparation were maintained at a level suitable for application of the compositions to the current collector. Moreover, no significant increase in viscosity is observed even after the passage of 24 hours. For these compositions for forming a positive electrode material mixture layer, the positive electrode active material was cracked via the preparation of the cracked slurry, and thereby newly generated surfaces were actively formed. It can be said that these compositions were able to satisfactorily inhibit the change in viscosity over time and can contribute to stable production of positive electrodes of lithium ion secondary batteries.

In contrast, in Comparative Example 2, in which a phosphate was added concurrently with mixing the positive electrode active material and the binder, and in Comparative Example 3, in which a phosphate was added after the viscosity increase of the slurry having proceeded, the viscosity increased to such an level that could not be measured at the stage of the cracked slurry as described above. It was difficult to uniformly mix the cracked slurry and the conductivity enhancing agent paste, and it was therefore impossible to adjust the viscosity of the compositions for forming a positive electrode material mixture layer to 15000 mPa·s or less.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A method for producing a composition for forming a positive electrode material mixture layer that contains at least a positive electrode active material, a binder, and a solvent, the method comprising the steps of:
mixing the positive electrode active material and phosphoric acid or a phosphate compound to form a mixture; and
mixing the mixture and the binder to form a composition,
wherein the formed composition contains the solvent and has a viscosity adjusted to 15000 mPa·s or less.

2. The method for producing a composition for forming a positive electrode material mixture layer according to claim 1, comprising the step of further adding phosphoric acid or a phosphate compound to the composition containing the binder.

3. A method for producing a composition for forming a positive electrode material mixture layer that contains at least a positive electrode active material, a binder, and a solvent, the method comprising the steps of:
forming a mixture containing the positive electrode active material and the binder; and
mixing the mixture and phosphoric acid or a phosphate compound to form a composition,
wherein the formed composition contains the solvent and has a viscosity adjusted to 15000 mPa·s or less.

4. The method for producing a composition for forming a positive electrode material mixture layer according to claim 3,
wherein the mixture containing the positive electrode active material and the binder further contains the solvent, and the phosphoric acid or the phosphate compound is added in a stage in which the mixture has a viscosity of 10000 mPa·s or less.

5. The method for producing a composition for forming a positive electrode material mixture layer according to any one of claims 1 to 4,
wherein the phosphoric acid or the phosphate compound is added in an amount of 0.01 to 1 parts by mass with respect to 100 parts by mass of the positive electrode active material.

6. A method for producing a lithium ion secondary battery including a positive electrode, a negative electrode, a separator, and a non-aqueous electrolyte, the method comprising the steps of:
applying, to one side or both sides of a current collector, a composition for forming a positive electrode material mixture layer that has been produced by the method for producing a composition for forming a positive electrode material mixture layer according to any one of claims 1 to 5, followed by drying, to produce a positive electrode; and
assembling the lithium ion secondary battery using the positive electrode produced in said step, the negative electrode, the separator, and the non-aqueous electrolyte.
